# EUROPÄISCHE PATENTSCHRIFT

(11) **EP 0 682 825 B1**
(45) Veröffentlichungstag und Bekanntmachung des Hinweises auf die Patenterteilung: **12.09.2001**
(21) Anmeldenummer: 94904988.6
(22) Anmeldetag: 31.01.1994
(51) Int. Cl.: H02K 19/02, H02K 41/03

(54) **MEHRPHASIGE ELEKTRISCHE MASCHINE MIT VERSETZT ANGEORDNETEN, MEHRPOLIGEN ELEKTROPOLEINHEITEN**
MULTIPHASE ELECTRIC MACHINE WITH OFFSET MULTIPOLAR ELECTRIC POLE UNITS
MACHINE ELECTRIQUE POLYPHASEE A UNITES MULTIPOLAIRES DECALEES

(30) Priorität: 02.02.1993 DE 4302807; 04.08.1993 DE 4326124
(43) Veröffentlichungstag der Anmeldung: 22.11.1995
(73) Patentinhaber: HILL, Wolfgang, 76135 Karlsruhe (DE)
(72) Erfinder: HILL, Wolfgang, 76135 Karlsruhe (DE)
(86) Internationale Anmeldenummer: DE9400090
(87) Internationale Veröffentlichungsnummer: WO9418741

(56) Entgegenhaltungen:
- DE-A- 3 711 711
- GB-A- 945 032
- GB-A- 1 099 010
- US-A- 4 398 112
- US-A- 5 032 746

## Beschreibung

Die Erfindung betrifft mehrphasige elektrische Maschinen gemäß dem Oberbegriff des Anspruch 1 und 8 sowie ein Verfahren zur Herstellung derartiger Maschinen gemäß dem Oberbegriff des Anspruch 7.

Bei der Herstellung von mehrphasigen elektrischen Maschinen, die mit hohen Strömen und Spannungen betrieben werden, erfordert die Isolierung von sich überschneidenden Leitersträngen einen erhöhten Fertigungsaufwand. Für hohe Leistungs- und Kraftdichten sollte der Leiteranteil am Nutvolumen möglichst groß und der Anteil der Leiterlänge im Wickelkopf möglichst klein sein.

Aus der US-PS 4 398 112 ist eine geschichtete Wicklung für Scheibenläufer und Linearmotoren bekannt, bei der gestanzte Leiterschichten vom Luftspalt aus in Richtung der Nuttiefe in die Nuten eingesetzt werden. Dabei ergeben sich in der aus der US-PS bekannten Wicklung zwar für alle Leiterstränge sehr kurze Längen, da jedoch alle Leiterstränge unterschiedlicher Phasen einen unterschiedlichen Abstand zum Luftspalt aufweisen, wird nur bei einphasigen Maschinen der Nutraum vollständig ausgenutzt. Einphasige Maschinen weisen jedoch starke Drehmomentschwankungen auf. Bei einer zweiphasigen Maschinen würde mit dem nach der US-Patentschrift bekannten Wicklung der Füllfaktor in den Nuten bereits auf 50% und bei drei Phasen auf 33% sinken.

In der GB-A-945 032 wird ein kleiner, einphasiger Hochfrequenzgenerator beschrieben der sich durch seine extrem flache Bauweise auszeichnet. Eine gedruckte Wicklung mit mäanderförmigem Leiterverlauf ist auf einem mehrpoligen Dauermagnetring angeordnet.

Aus der GB-A-1 099 010 ist eine dreiphasige Reluktanzmaschine mit axialem Luftspalt bekannt, deren bewickelter Stator zwischen zwei Rotorscheiben angeordnet ist. Drei aufeinanderfolgende Elektropole gehören jeweils zu unterschiedlichen Phasen, wobei aufeinanderfolgende Elektropole einer Phase gegensinnig bewickelt und in Reihe geschaltet sind.

Aus der DE-OS 1 638 361, der US 3 978 356 und der EP 0 159 005 sind elektrische Maschinen mit zylindrischem Luftspalt bekannt, die versetzt zueinander angeordnete einphasige Elektropoleinheiten aufweisen.

Der Erfindung lag daher die Aufgabe zugrunde eine mehrphasige elektrische Maschine und ein Verfahren zur Herstellung einer derartigen Maschine derart weiterzubilden, daß bei geringem Herstellungsaufwand hohe Leistungs- und Kraftdichten bei geringen ohmschen Verlusten erreicht, sowie eine materialsparende, gut automatisierbare und damit kostengünstige Herstellung ermöglicht wird.

Die Aufgabe ist erfindungsgemäß mit den Merkmalen der Ansprüche 1 und 7 oder 8 gelöst.

Eine erfindungsgemäße Maschine besteht aus mehreren Elektropoleinheiten, deren Phasenanzahl jeweils nur einem Bruchteil der Phasenanzahl der Maschine entspricht. In Bewegungsrichtung bzw. in Richtung der Nutbreite weist eine Elektropoleinheit mehrere Pole mit abwechselnder Polarität auf, wobei die Polteilung innerhalb einer Elektropoleinheit konstant ist. Der zugehörige Rotor oder Stator weist auf seinem gesamten Umfang (bzw. Länge) diese Polteilung auf. Die Phasenanzahl der Maschine wird gegenüber der Phasenanzahl der Elektropoleinheiten vervielfacht, indem starr miteinander verbundene Elektropoleinheiten zu den Rotorpolen der Maschine um einen Bruchteil einer Polteilung gegeneinander versetzt angeordnet sind.

Diese vorzugsweise nur ein- oder zweiphasigen Elektropoleinheiten sind entweder in Richtung der Nuttiefe, in Nutrichtung oder in Richtung der Nutbreite hintereinander angeordnet und weisen Leitersträngen mit rechteckförmigem Querschnitt auf. Die Leiter verlaufen mäanderförmig in zum Luftspalt parallelen Lagen und Teilbereichen, die senkrecht zur Bewegungsrichtung verlaufen, innerhalb von weichmagnetischen Körpern.

In einer vorteilhaften Ausführungsform besteht eine mehrphasige elektrische Maschine aus baugleichen, einphasigen Elektropoleinheiten, deren Anzahl der Phasenanzahl oder einem ganzzahligen Vielfachen davon entspricht. Hierdurch muß die Leiterisolation nur auf einen Bruchteil der Klemmenspannung ausgelegt werden. In Maschinen mit ebenem Luftspalt besteht der gesamte Leiteraufbau aus nur zwei scheibenförmigen Leiterbauformen. Der genutete weichmagnetische Körper kann einstückig hergestellt oder aus einer Zahnsegmentbauform und zwei Jochsegmentbauformen zusammengesetzt werden. Einschließlich der Nutkeile besteht jede Elektropoleinheit dann lediglich aus sechs einfachen Bauteilen, die aufgrund ihrer großen Stückzahl in einer automatisierten Fertigungsanlage kostengünstig herstellbar sind. Vorteilhaft sind in Maschinen mit gerader Phasenanzahl jeweils zwei um eine halbe Polteilung versetzte Elektropoleinheiten einer Rotorscheibe zugeordnet und die Rotorscheibenanzahl entspricht der halben Phasenanzahl. Eine dreiphasige Maschine kann jedoch auch aus drei Rotorscheiben und sechs Elektropoleinheiten aufgebaut werden.

Größere rotierende Maschinen werden dagegen in mehrere baugleiche, sektorförmige Elektropoleinheiten aufgeteilt, wobei die Grenznuten um den Bruchteil einer Polteilung breiter ausgeführt sind. Auch durch diese symmetrische Maschinenaufteilung in baugleiche Elektropoleinheiten vereinfacht sich die Herstellung und Handhabung der gesamten Maschine.

Die Zeichnungen stellen vorteilhafte Ausführungsformen der Erfindung dar.
- Fig. 1: zeigt einen Längsschnitt eines vierphasigen Scheibenläufers in Außenläuferbauart;
- Fig. 2: zeigt sechs Seitenansichten gemäß den Schnitten A - A bis F - F durch den dreißigpolige Scheibenläufer aus Fig. 1;
- Fig. 3: zeigt drei Tangentialschnitte durch die aktiven Teile von vierphasigen Maschinen;
- Fig. 4: zeigt fünf Bauformen von vierphasigen Linearmotoren;
- Fig. 5: zeigt einen Längsschnitt durch den genuteten Stator eines dreiphasigen Scheibenläufers mit sechs fünfpoligen Sektoren;
- Fig. 6: zeigt einen Längsschnitt durch den zum Scheibenläufer aus Fig. 1 gehörenden 32-poligen Rotor mit Permanentmagneten;
- Fig. 7: zeigt die Montage der Zahnsegmente und Nutkeile für einen vierpoligen Sektor eines Linearmotors;
- Fig. 8: zeigt die Montage des zehnschichtigen Leiterstapels für den Sektor aus Fig. 7;
- Fig. 9: zeigt wie der Leiterstapel aus Fig. 8 auf die Zähne aus Fig. 7 geschoben wird;
- Fig. 10: zeigt wie durch das Aufschieben der Jochsegmente der Aufbau des vierpoligen Sektors stabilisiert wird;
- Fig. 12: zeigt einen Profilleiter mit variablem Querschnitt für eine Radialluftspaltmaschine;
- Fig. 13: zeigt einen Längsschnitt durch eine Vorrichtung zur Vorfertigung einer vierpoligen Sektorwicklung einer Radialluftspaltmaschine mit einem Profilleiter.

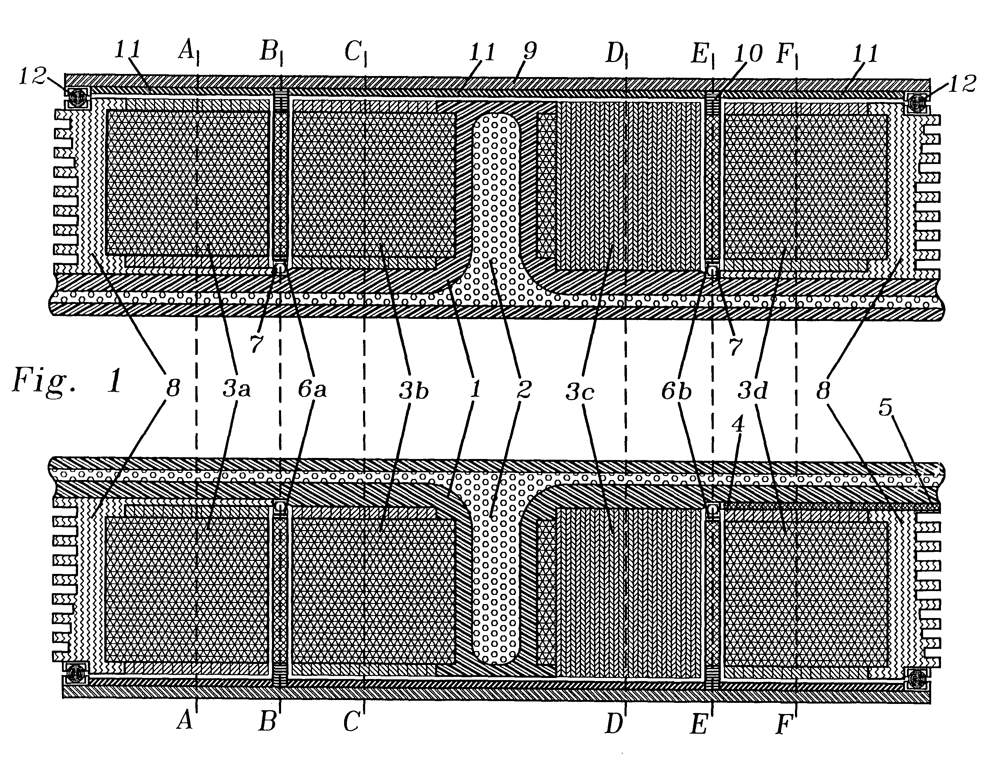

Figur 1 zeigt einen Längsschnitt eines vierphasigen Scheibenläufer in Außenläuferbauart. Im inneren Trägerkörper 1 befindet sich ein Hohlraum, der von einem Kühlmittel 2 durchflossen wird. Bei der Montage werden zunächst die beiden vorgefertigten inneren Elektropoleinheiten 3b, 3c axial aufgepreßt. Hierbei wird die tangentiale Versetzung um jeweils eine viertel Polteilung durch die Stromzu- und -ableitungen 4 gewährleistet, die in isolierten Nuten 5 des inneren Trägerkörpers 1 axial nach außen verlaufen. Anschließend werden die beiden baugleichen Rotorscheiben 6a, 6b zusammen mit ihren inneren Lagern 7 und den beiden äußeren Elektropoleinheiten 3a, 3b mit ihren Kühlkörpern 8 axial aufgepreßt. Beim axialen Aufschieben des rohrförmige Gehäusemantel 9 gewährleisten die Erhöhungen 10 der Rotorscheiben und Distanzstäbe 11 einen spielfreien Kraftschluß und eine exakte Positionierung der Rotorscheiben. Abschließend werden die beiden äußeren Lagern 12 aufgepreßt.

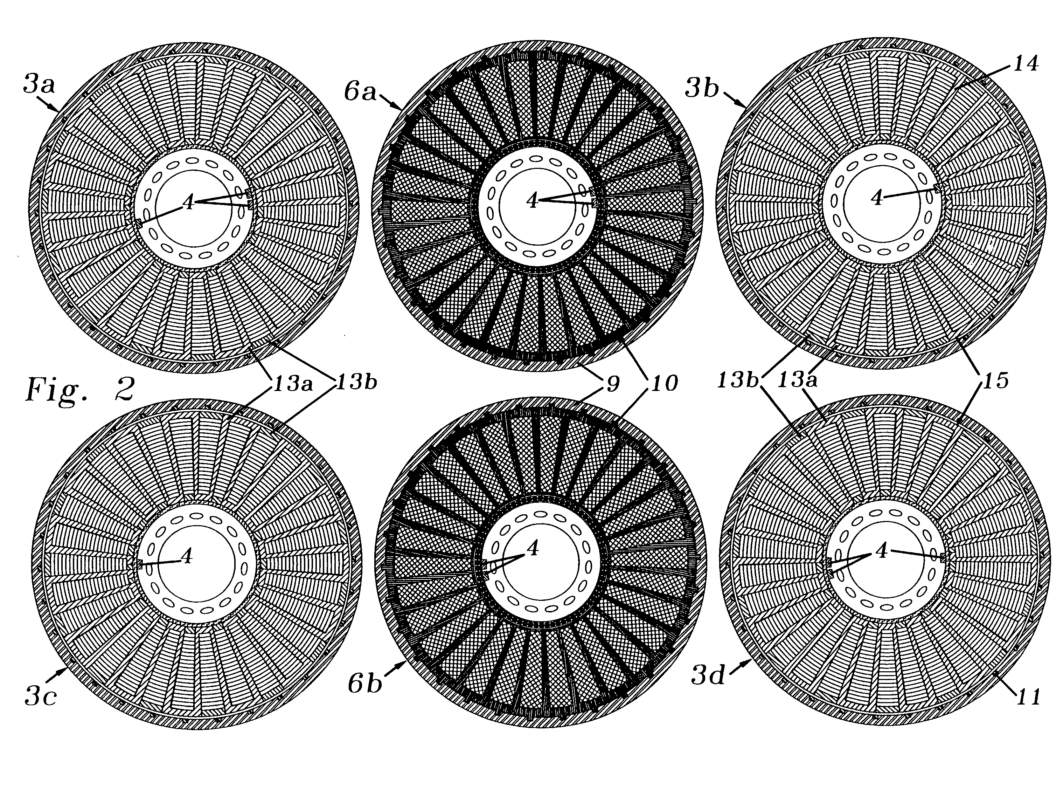

Figur 2 zeigt sechs Seitenansichten gemäß den Schnitten A - A bis F - F durch den dreißigpoligen Scheibenläufer aus Fig. 1, wobei die Schraffurmuster beibehalten wurden. Die vier baugleichen Elektropoleinheiten 3a - d sind gegenüber den beiden deckungsgleich angeordneten Rotorscheiben 6a,b um Bruchteile einer Polteilung gegeneinander verdreht. Jeweils zu einer Rotorscheibe gehörende Elektropoleinheiten 3a,b bzw. 3c,d sind um eine halbe Polteilung zueinander verdreht. Zwischen den beiden Gruppen beträgt die Verdrehung eine viertel Polteilung. Der gesamte Leiteraufbau besteht aus zwei - immer abwechseld um eine Polteilung versetz aufeinanderliegenden - Leiterschichten 13a,b. Sie sind anhand unterschiedliche Schraffurwinkel und Schraffurdichten unterscheidbar, während der weichmagnetische Körper 14 bogenförmig schraffiert ist. Die Leiterschicht 13b ist nur in den beiden Wickelköpfen 15 sichtbar, wobei sie die Lücken der Leiterschicht 13a zur Verdoppelung ihrer Leiterhöhe ausnutzt.

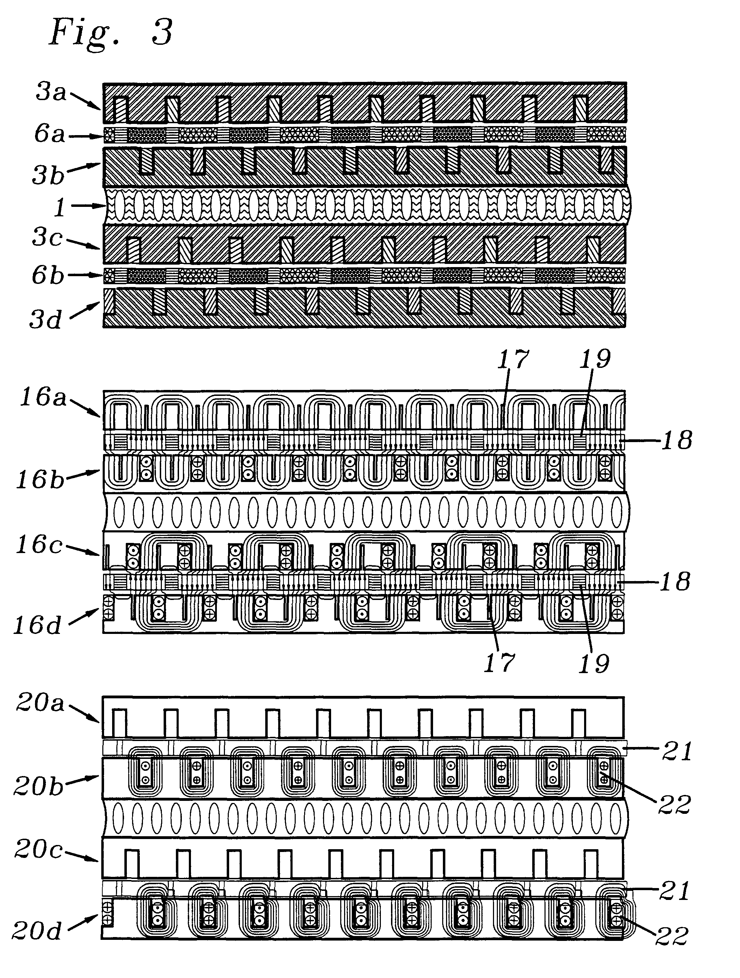

Der Strom durchfließt in jeder Leiterschicht 13a,b mäanderförmig den gesamten Maschinenumfang minus einer Polteilung. An dieser Lücke erfolgt entweder die Stromzu- und -ableitung **4** zur Ansteuerung oder der Übergang zu einer in Richtung der Nuttiefe benachbarten Leiterschicht. Die Rotorscheiben 6a,b sind Polteilung für Polteilung zusammensetztbar, wobei die weich- oder hartmagnetischen Segmente in unmagnetischen Rahmenteilen fixiert sind. In den in Fig. 3 dargestellten drei Tangentialschnitten durch eine linearisierte vierphasige Maschinen, wird die tangentiale Versetzung der Elektropoleinheiten und die Verläufe des magnetischen Flußes bei hart- bzw. weichmagnetischen Segmenten ersichtlich.

Fig. 3a zeigt einen zehn Polteilungen umfassenden Ausschnitt, wobei analog zu Fig. 1 und 2 die Schraffuren und Bezugszeichen beibehalten und lediglich die Nuttiefe reduziert wurde.

In Fig. 3b wird der Feldverlauf einer permanenterregten Maschine ohne Berücksichtigung des Ankerquerfeldes gezeigt. Die für diese Rotorstellung günstige Stromflußrichtung wird anhand jeweils zweier Kreissymbole in den Nuten dargestellt, wobei ein Punkt im Kreis den aus dem Blatt kommenden Strom und ein Kreuz im Kreis den in das Blatt hineinfließenden Strom symbolisiert. Zur Führung des magnetischen Flusses sind in der tangentialen Mitte der Zähne des weichmagnetischen Körpers Schlitze 17 eingearbeitet. Die Nuten der Elektropoleinheit 16a liegen der Rotorpollücke gegenüber. Die zugehörige Phase befindet sich im Kommutierungsvorgang und ist daher stromlos dargestellt. Dagegen erzeugt die Elektropoleinheit 16b ihr volles Drehmoment. Auch die ebenfalls um eine halbe Polteilung zueinander versetzten Elektropoleinheiten 16c und 16d können zum gewünschten Drehmoment einen positiven Beitrag leisten. Die nach rechts drehende Rotorscheibe besteht aus axial magnetisierten Seltenerdenmagneten 18, die von einem faserverstärkten Rahmen 19 in ihrer Position gehalten werden.

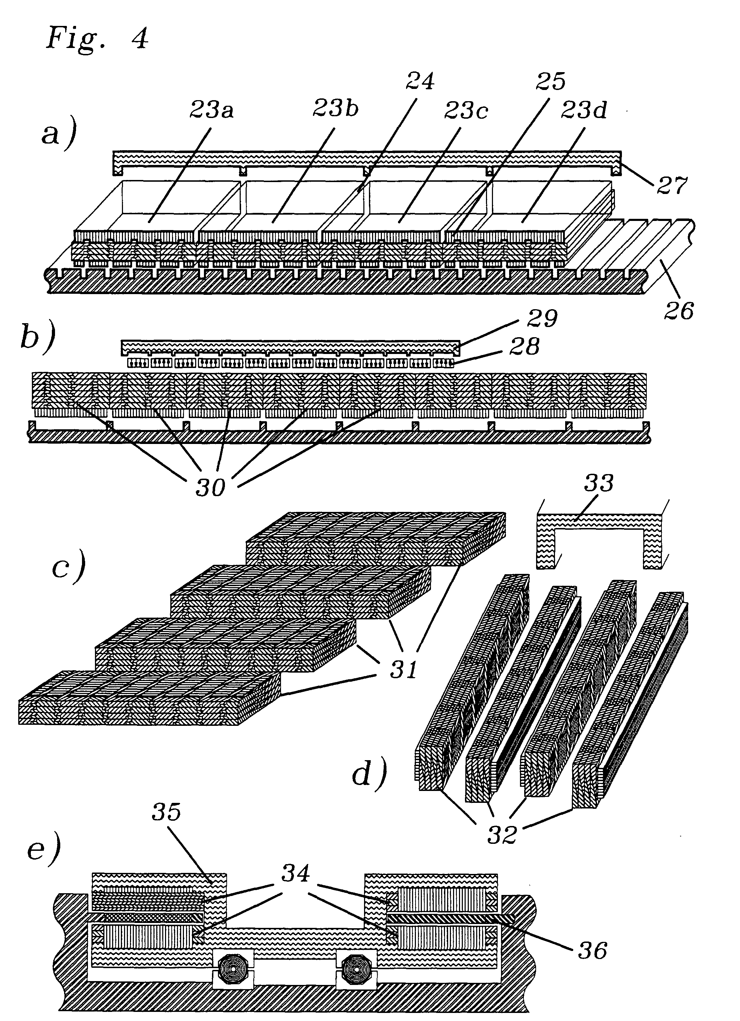

In Fig. 3c ist der Verlauf des Ankerfelds in einer vierphasigen Reluktanzmaschine dargestellt. Der Strom wird in den Elektropoleinheiten 20a - d jeweils dann eingeschaltet, wenn sich durch eine Bewegung der weichmagnetischen Segmente 21 nach rechts der magnetische Widerstand für das Ankerfeld vermindert. Für die in der Fig. 3c gezeigte Rotorstellung hat das in der Elektropoleinheit 20b erzeugte Feld seinen minimalen magnetischen Widerstand erreicht und der bis dahin in den Leitern 22 fließende Strom wird nun ausgeschaltet. Eine den Rotor nach rechts bewegende Kraft wird nun vom Ankerfeld in der Elektropoleinheit 20d erzeugt. Derartige Reluktanzmaschinen können auch als Schrittmotoren eingesetzt werden. In Figur 4 werden fünf Anordnungen von Elektropoleinheiten in vierphasigen Linearmotoren dargestellt.

Fig. 4a zeigt eine einfache Bauform eines vierphasigen Linearmotors in dem die vier Elektropoleinheiten 23a - d in Laufrichtung hintereinander angeordnet sind. Der Abstand 24 zwischen den baugleichen Elektropoleinheiten beträgt eine viertel Polteilung. Der Abstand ist anhand der Rückschlüße 25 zu erkennen. Die aus weichmagnetischem Material bestehende genutete Statorschiene 26 ist auf der gesamten Länge in den Fahrweg integriert. Der normalerweise mit den Elektropoleinheiten fest verbundene Läufer 27 ist zur Verdeutlichung der dreidimensionalen Anordnung nur nach oben verschoben angedeutet.

Fig. 4b zeigt eine Ausführungsform deren Läufer 29 vierzehn hartmagnetische Segmente 28 aufweist, um vier dreipolige Elektropoleinheiten 30 zu überdecken, die wieder jeweils eine viertel Polteilung Abstand zueinander aufweisen, wobei einzelne Elektropoleinheiten nur dann bestromt werden, wenn sie zumindest teilweise vom Permanentfeld durchflutet sind.

Für in Bewegungsrichtung kürzere Läufer werden die Elektropoleinheiten 31 - wie in Fig.4c gezeigt - quer zur Laufrichtung bzw. in Nutrichtung nebeneinander angeordnet.

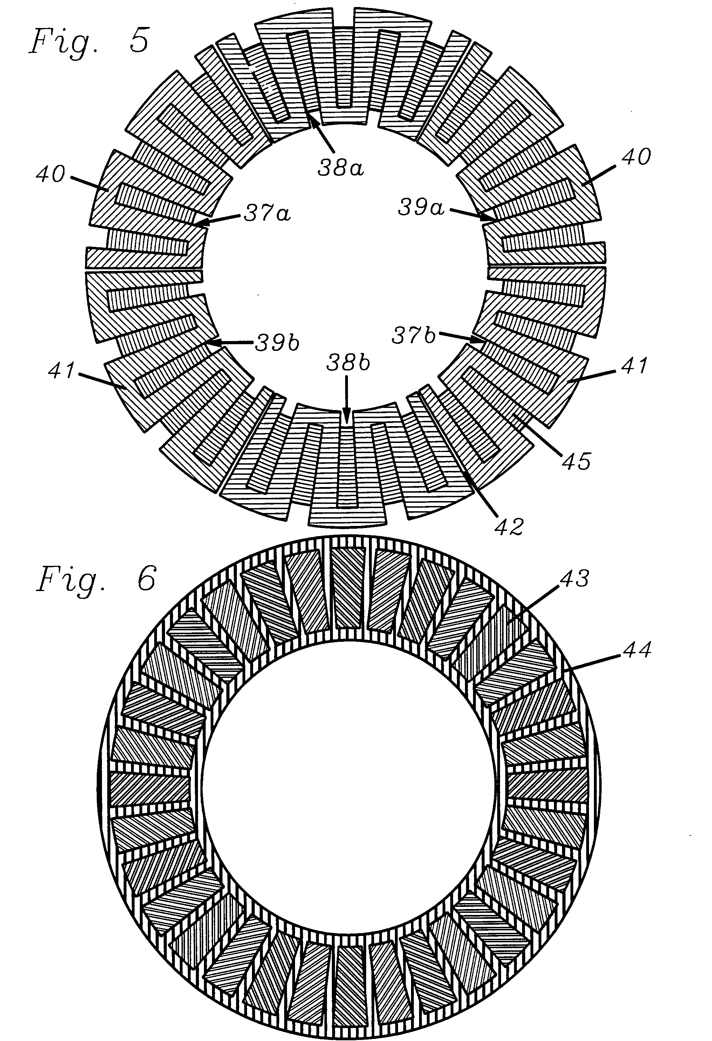

Soll der Läufer sowohl längs als auch quer kleine Außenabmessungen aufweisen, empfiehlt sich die in Fig. 4d dargestellte Anordnung, wobei die Elektropoleinheiten 32 in Richtung der Nuttiefe hintereinander angeordnet sind. Die aktiven Teile des Läufers oder Ständers 33 ragen kufenförmig zwischen jeweils zwei zueinander versetzte Elektropoleinheiten. Fig. 4e zeigt eine Anordnung mit einem im Verhältnis zu den Elektropoleinheiten 34 sehr großen Läufer 35. Die aktiven Teile sind seitlich an horizontal in den Läufer hineinragenden Segmentschienen 36 angeordnet. Um Drehkräfte zu kompensieren sind jeweils zwei phasengleiche Elektropoleinheiten in diagonal gegenüberliegenden Ecken des Läufers angeordnet. Von den sechs baugleichen Sektoren 37a bis 39b, die in Figur 5 dargestellt sind, gehören jeweils zwei sich gegenüberliegende Sektoren zu einer Phase. Die Leiterstapel setzen sich aus zwei abwechselnd übereinandergeschichten Stanzteilen 40, 41 zusammen. In der verbreiterten Grenznut 42 trennt eine dickere Isolierschicht die Leiter unterschiedlicher Phasen. Der Abstand der radial verlaufenden Mittelachsen der Randzähne benachbarter Sektoren beträgt vier Drittel der normalen Polteilung, die wiederum der Läuferpolteilung entspricht. Während der Rotor, wie Figur 6 zeigt, symmetrisch aus zweiunddreißig baugleichen Magnetpolen 43 aufgebaut ist, die in einen Kunststoffkörper 44 eingebettet sind, weist der Stator zur Bildung unterschiedlicher Phasen sechs breitere Grenznuten 42 und nur dreißig Pole 45 auf.

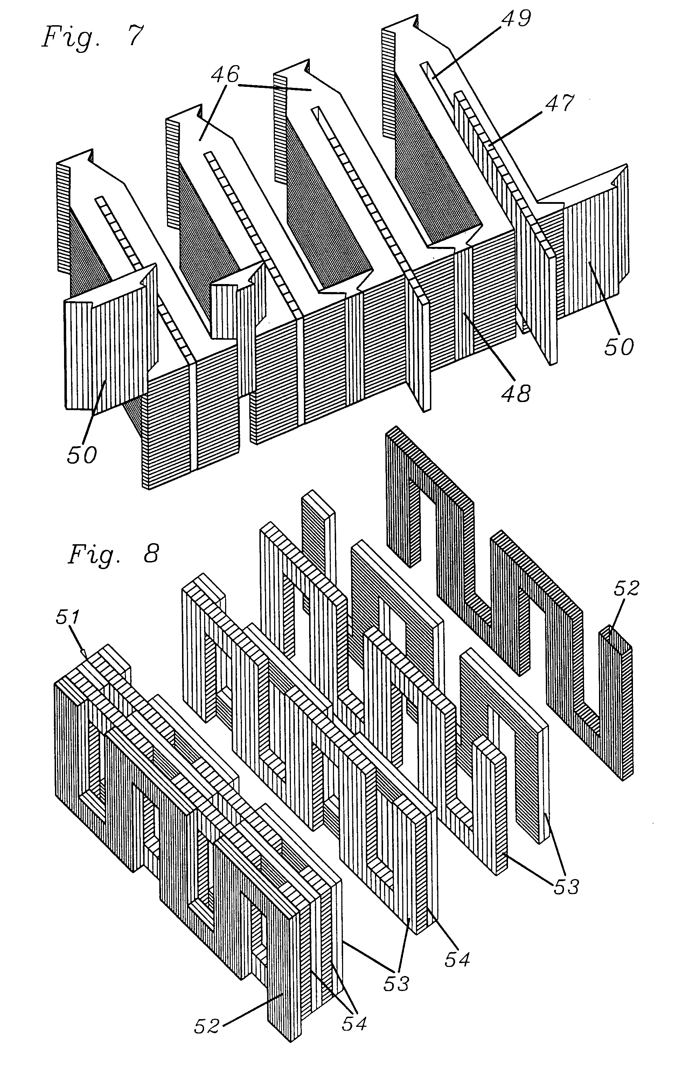

Die Figuren 7 bis 10 zeigen den Zusammenbau eines vierpoligen Sektors für einen Linearmotor, wobei die gezeigte Bauform - um unterschiedliche Achsen gekrümmt - ebenfalls für Axial- und Radialluftspaltmaschinen einsetzbar ist.

Beim Zusammenbau des Sektors werden, wie in Figur 7 gezeigt, zunächst die Zahnsegmente 46 mit Isolierplatten 47 und elastischen Nutkeilen 48 in ihrer endgültigen Position zusammengefügt. Die Isolierplatten füllen die schmalen Flußführungsnuten 49 in der Mitte der Zahnsegmente aus und die Nutkeile gewährleisten den Abstand zwischen den Zahnsegmenten und vermeiden Luftgeräusche. Für die breitere Grenznut werden breitere Nutkeile 50 benötigt.

In Figur 8 wird das Zusammensetzen eines zehnschichtigen Leiterstapels 51 für den vierpoligen Sektor aus Fig. 7 dargestellt. Die linken fünf Leiterteile bilden bereits einen kompakten Stapel, während die restlichen fünf Leiterteile paarweise oder einzeln angefügt werden. Jeder Leiterstapel des mehrphasigen Linearmotors besteht aus zwei gestanzten Leiterbauformen, wobei neben den Zu- und Ableitern 52 acht normale Leiterschichten 53 eingesetzt werden. Die Leiterschichten werden nach dem Zusammenschieben an den Grenzkanten 54 verschweißt.

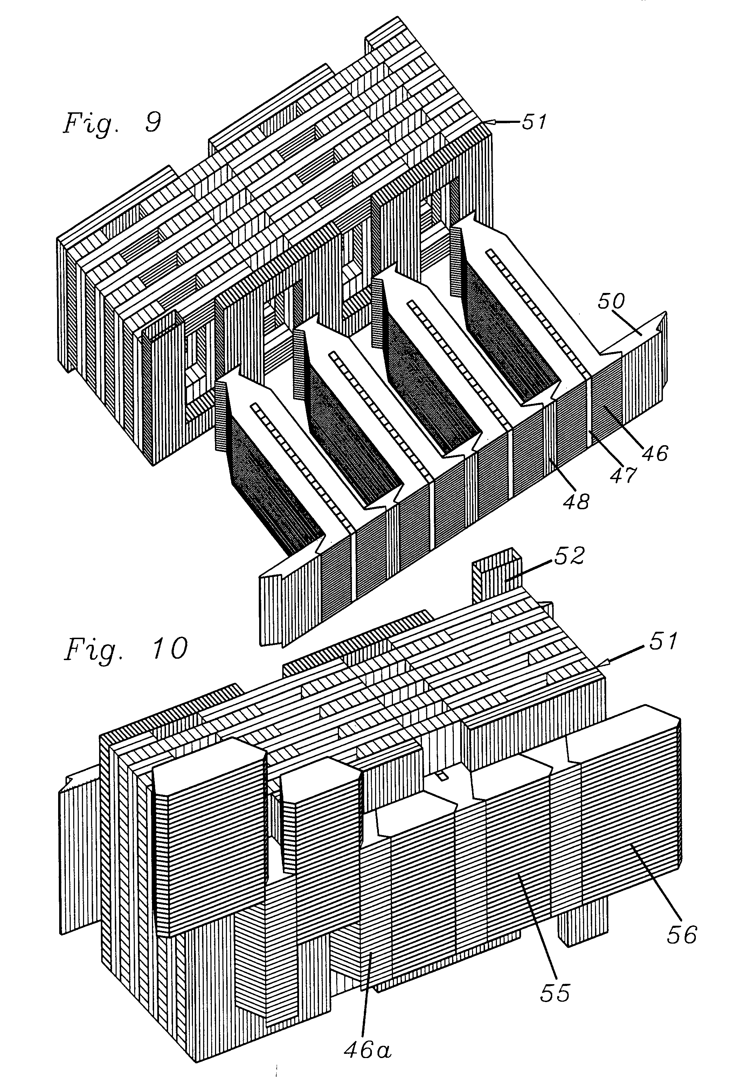

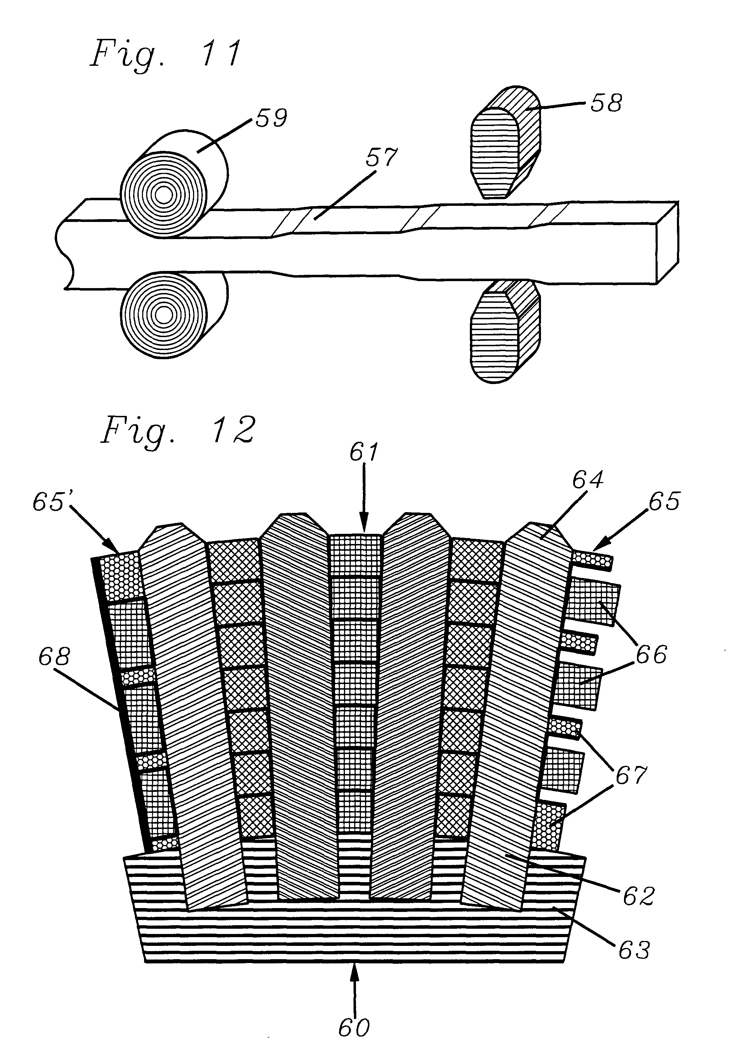

In Figur 9 wird der funktionsbereite Leiterstapel 51 auf die Zahnsegmente 46 gesteckt. Abschließend werden in Figur 10 die Jochsegmente 55, 56 in die aus dem Leiterstapel 51 herausragenden Zahnsegmentenden 46a in Nutrichtung eingeschoben, wobei der Leiterstapel gegen die elastischen Nutkeile 48, 50 gedrückt wird und ein spielfreier Aufbau entsteht, der jederzeit wieder demontierbar ist. Neben den normalen Jochsegmenten 55 sind verbreiterte Jochsegmente 56 für die Grenznuten zu den benachbarten baugleichen Sektoren anderer Phasen erforderlich, die alternativ zu den vielschichtigen normalen Jochsegmenten auch aus Ferrit bestehen können.

Alternativ zu den biegefrei vorgefertigten Leiterschichten, kann die Aufteilung der mehrphasigen Maschine in einphasige Elektropoleinheiten, aufgrund der überschneidungsfreien Leiterverläufe auch vorteilhaft mit Profilleitern ausgeführt werden.

In Figur 11 ist ein rechteckförmiger Profilleiter 57 für eine Radialluftspaltmaschine dargestellt, dessen Leiterquerschnitt vor dem Aufbringen der Isolierung in einer Beschichtungsanlage 58 von einer programmierbaren Walzmaschine 59 nach vorbestimmten Längenabschnitten verändert wird. Die Längenabschnitte mit konstantem Querschnitt entsprechen den Leiterlängen der zum Luftspalt parallelen Lagen, wodurch die Leiterbreite sich bei jedem Lagenwechsel proportional mit dem Radius verändert.

Figur 12 zeigt eine Vorrichtung 60, in der eine vierpolige Sektorwicklung 61 für eine Radialluftspaltmaschine selbsttragend vorgefertigt wird. Die den Zähnen entsprechenden Vorrichtungsteile 62 stecken in einem Basiskörper 63 und weisen, um das Leitereinlegen zu erleichtern, sich konisch verjüngende Enden 64 auf. In den breiteren Grenznuten 65 sind die schräg verlaufenden Teilstrecken des Leiterstranges 66 in Führungskörpern 67 eingelegt, die aus einem isolierenden, hochfesten Kunststoff bestehen. Bevor die durch ein Bindemittel selbsttragend vorgefertigte Sektorwicklung 61 samt Nutisolierung nach dem radialen Herausziehen der Zahnteile 62 aus der Vorrichtung 60 genommen wird, werden die Leiterteilstrecken in den Grenznuten 65 ein weiteres mal verformt, indem sie in die stabilen Führungskörper 67 tangential eingepreßt werden. In der Darstellung sind die Leiterteilstrecken in der linken Grenznut 65' bereits verpreßt und in der rechten Grenznut 65 noch nicht. Durch tangentiales Aneinanderreihen von nur durch dünne Isolierplatten 68 getrennten Sektorwicklungen 61 entsteht die Gesamtwicklung der mehrphasigen Maschine.

## Patentansprüche

1. Mehrphasige elektrische Maschine mit ausgeprägten Elektropolen (45), wobei in Bewegungsrichtung Pole mit abwechselnder Polarität nebeneinander angeordnet sind, der magnetische Fluß in den Elektropolen (45) durch weichmagnetisches Material (14) fließt und die Polteilung des den Elektropolen (45) am Luftspalt gegenüberliegenden Läufers oder Stators (6, 18, 21) auf dem gesamten Umfang oder der Länge der Maschine konstant ist,
**dadurch gekennzeichnet**, daß die Maschine mehrere mehrpolige Elektropoleinheiten (3, 16, 20, 37a - 39h) aufweist, deren Phasenanzahl einem Bruchteil der Phasenanzahl der gesamten Maschine entspricht und die Polteilung innerhalb einer Elektropoleinheit (3, 37a - 39b) konstant ist, wobei die Leiter (40, 41, 66) innerhalb der Elektropoleinheit in etwa einen rechteckförmigen Querschnitt aufweisen, die Leiterstränge (13, 22, 61) mäanderförmig über die gesamte Länge der jeweiligen Elektropoleinheit in zum Luftspalt parallelen Schichten (40,41, 53) verlaufen und einige der starr miteinander verbundenen Elektropoleinheiten (16a - d, 20a - d) bezüglich zu den ihnen gegenüberliegenden Läufer- oder Statorpolen (18, 21) um einen Bruchteil einer Polteilung gegeneinander versetzt angeordnet sind, wobei die Elektropoleinheiten (30, 31, 32) entweder in Richtung der Nuttiefe, in Richtung der Nuten oder in Bewegungsrichtung hintereinander angeordnet sind.

2. Mehrphasige elektrische Maschine nach Anspruch 1, wobei der Rotor mit axialem oder radialem Luftspalt vor dem Stator rotiert,
**dadurch gekennzeichnet**, daß die Elektropoleinheiten (37a -39b) sektorförmig ausgebildet sind, wobei die Leiterstränge (40, 41, 66) nur einen Bruchteil des Maschinenumfangs durchlaufen und die Breite der Grenznuten (42, 65) zwischen zwei tangential benachbarten sektorförmigen Elektropoleinheiten (37a - 39b), um den Bruchteil einer Polteilung größer als die Breite der normalen Nuten innerhalb eines Sektors ist.

3. Mehrphasige elektrische Maschine nach Anspruch 1,
**dadurch gekennzeichnet**, daß die Anzahl der Elektropoleinheiten (3, 37a - 39b) der Phasenanzahl bzw. dem ganzahligen Vielfachen der Phasenanzahl der Maschine entspricht, wobei alle Elektropoleinheiten einphasig und baugleich ausgeführt sind.

4. Mehrphasige elektrische Maschine nach Anspruch 3,
**dadurch gekennzeichnet**, daß Leiterschichten (13a, 13b), die nur durch dünne Isolierschichten getrennt aufeinanderliegen in Richtung der_Nutbreite um eine Polteilung versetzt zu einander verlaufen, wobei die Leiterschichten direkt am weichmagnetischen Körper (14) anliegen und in den Teilbereichen, die im Wickelkopf (15) in Richtung der Nutbreite verlaufen, gegenüber den den übrigen Teilbereichen in Richtung der Nuttiefe vergrößert sind.

5. Mehrphasige elektrische Maschine nach Anspruch 1,
**dadurch gekennzeichnet**, daß auf gegenüberliegenden Seiten eines Läufers (6) oder Ständers (36) zwei baugleiche Elektropoleinheiten (3, 34) angeordnet sind, die in Richtung der Nutbreite um eine halbe Polteilung zueinander versetzt sind.

6. Mehrphasige elektrische Maschine nach Anspruch 5,
**dadurch gekennzeichnet**, daß weitere identisch aufgebaute Baugruppen, zur Bewegung des gleichen Bauteils vorgesehen sind, wobei die Läufer (6, 35) jeweils fest mit dem bewegten Bauteil verbunden sind und die Elektropoleinheiten (3, 34) jeweils um den der Phasenanzahl entsprechenden Bruchteil einer Polteilung bezüglich der Läuferpole versetzt angeordnet sind und zwischen den inneren Elektropoleinheiten (3b, 3c) ein Kühlmittel (2) zirkuliert.

7. Verfahren zur Herstellung einer mehrphasigen elektrischen Maschine mit ausgeprägten Elektropolen, wobei in Bewegungsrichtung Pole mit abwechselnder Polarität nebeneinander angeordnet sind, der magnetische Fluß in den Elektropolen durch weichmagnetisches Material fließt und die Polteilung des den Elektropolen am Luftspalt gegenüberliegenden Läufers oder Stators auf dem gesamten Umfang oder der Länge der Maschine konstant ist,
**dadurch gekennzeichnet**, daß ein rechteckförmiger Profilleiter vor dem Aufbringen der Leiterisolation mit variablem Leiterquerschnitt vorgefertigt, nach dem Einlegen in mäanderförmigen Lagen innerhalb einer Vorrichtung in den Leiterabschnitten, die in den Grenznuten zwischen einphasigen, mehrpoligen Elektropoleinheiten liegen, ein weiteres Mal verformt und die Maschine anschließend aus mehreren derartigen Elektropoleinheiten zusammengesetzt wird.

8. Mehrphasige elektrische Maschine mit ausgeprägten Elektropolen (45), wobei in Bewegungsrichtung Pole mit abwechselnder Polarität nebeneinander angeordnet sind, der magnetische Fluß in den Elektropolen (45) durch weichmagnetisches Material (14) fließt und die Polteilung des den Elektropolen (45) am Luftspalt gegenüberliegenden Läufers oder Stators (6, 18, 21) auf dem gesamten Umfang oder der Länge der Maschine konstant ist,
**dadurch gekennzeichnet**, daß die Maschine mehrere mehrpolige Elektropoleinheiten (23a-d, 30, 31, 32, 34) aufweist, deren Phasenanzahl einem Bruchteil der Phasenanzahl der gesamten Maschine entspricht und die Polteilung innerhalb einer Elektropoleinheit (23a-d, 30, 31, 32, 34) konstant ist, wobei in einem Linearmotor die aktiven Teile des Läufers oder Stators zwischen jeweils zwei Elektropoleinheiten (32, 34) ragen und einige der starr miteinander verbundenen Elektropoleinheiten (23a-d, 30, 31, 32, 34) bezüglich zu den ihnen gegenüberliegenden Läufer- oder Statorpolen (18, 21) um einen Bruchteil einer Polteilung gegeneinander versetzt angeordnet sind, wobei die Elektropoleinheiten (32, 31, 32) entweder in Richtung der Nuttiefe und in Richtung der Nuten oder in Bewegungsrichtung hintereinander angeordnet sind.

9. Mehrphasige elektrische Maschine nach Anspruch 9,
**dadurch gekennzeichnet**, daß die aktiven Teile des Stators seitlich an in den Läufer hineinragenden Segmentschienen 36 angeordnet sind.

## Claims

1. A multi-phase electric machine with concentrated electric poles (45), in which poles with alternating polarity are arranged side by side in the direction of movement, the magnetic flux is flowing in the electric poles (45) through soft-magnetic material (14), and the pole pitch of the moving member or stator (6, 18, 21) disposed opposite the electric poles (45) at the air gap is constant.over the entire circumference or length of the machine,
**characterised in that** said machine consists of several multi-polar electric pole units (3, 16, 20, 37a - 39b), the number of phases of said electric pole units equaling a fraction of the number of phases of the entire machine, and the pole pitch within each electric pole unit (3, 37a-39b) is constant, the conductors (40, 41, 66) show a rectangular cross section within the electric pole units, the conductor lanes (13, 22, 61) progress in a meander pattern over the entire length of the respective electric pole units (3, 37a-39b) in layers (40, 41, 53) parallel to the air gap, some of the rigidly connected electric pole units (16a-16d, 20a-20d) are offset by a fraction of a pole pitch against each other with reference to the poles (18, 21) of said moving member or stator which lie opposite said electric pole units, and the electric pole units (30, 31, 32) are arranged successively in either the direction of the groove depth, in direction of the groove, or in direction of the movement.

2. A multi-phase electric machine as recited in claim 1, the rotor thereof possessing an axial or radial air gap and rotating in front of the stator,
**characterised in that** said electric pole units (37a-39b) are designed in the shape of sectors and in which the conductor lanes (40, 41, 66) progress only through a fraction of the machine circumference, and the width of the interfacing grooves (42, 65) between two tangentially adjacent sector-shaped electric pole units (37a-39b) are larger by a fraction of a pole pitch than the width of the normal groove within a sector.

3. A multi-phase electric machine as recited in claim 1, **characterised in that** the number of electric pole units (3, 37a-39b) corresponds to the number of phases, or a whole-number multiple of the number of phases respectively, and in which all electric pole units are of a single phase and identical design.

4. A multi-phase electric machine as recited in claim 3, **characterised in that** said conductor lanes (13a, 13b), which lie on top of each other being separated only by thin insulating layers, and which, offset against each other by one pole pitch, progress in direction of the groove width, said conductor lanes lying directly adjacent to the magnetic body (14), and which, in the partial areas that progress in the winding overhang (15) in direction of the groove width, are enlarged in relation to the remaining partial areas in direction of the groove depth.

5. A multi-phase electric machine as recited in claim 1, **characterised in that** two identical electric pole units (3, 34) are arranged on opposite sides of a moving member (6) or stator (36), said electric pole units being offset against each other by one half pole pitch in direction to the groove width.

6. A multi-phase electric machine as recited in claim 5, **characterised in that** additional identically designed structural components are intended for the motion of the same structural part and in which the moving members (6, 35) are firmly connected with the respective movable structural parts, and in which the electric pole units (3, 34) are offset with reference to the poles of said moving members by the respective fraction of a pole pitch, which corresponds to the number of phases, and in which a coolant (2) is circulating between the inner electric pole units (3b, 3c).

7. A process for the production of a multi-phase electric machine with concentrated electric poles, in which poles with alternating polarity are arranged side by side in the direction of movement, the magnetic flux is flowing in the electric poles through soft-magnetic material, and the pole pitch of the moving member or stator disposed opposite the electric poles at the air gap is constant over the entire circumference or length of the machine,
**characterised in that** prior to the application of conductor insulation material, a rectangular shaped profiled conductor is prefabricated to have variable conductor cross sections, said profiled conductor, after insertion in meander-shaped layers into a device is deformed again in those conductor lengths which lie in the interfacing grooves between the single-phase, multi-pole electric pole units, and subsequently a machine is assembled from several such electric pole units.

8. A Multi-phase electric machine with concentrated electric poles, in which poles with alternating polarity are arranged side by side in the direction of movement, the magnetic flux is flowing in the electric poles (45) through soft-magnetic material (14), and the pole pitch of the moving member or stator (6, 18, 21) disposed opposite the electric poles (45) at the air gap is constant over the entire circumference or length of the machine,
**characterised in that** said machine consists of several multi-polar electric pole units (23a-d, 30, 31, 32, 34), the number of phases of said electric pole units equaling a fraction of the number of phases of the entire machine, and the pole pitch within each electric pole unit (23a-d, 30, 31, 32, 34) is constant, and in which, in a linear motor the active parts of the moving member or the stator reach between two each of the electric pole units (32, 34), and some of the rigidly connected electric pole units (23a-d, 30, 31, 32, 34) are offset by a fraction of a pole pitch against each other with reference to the poles (18, 21) of said moving member or stator which lie opposite said electric pole units, and the electric pole units (30, 31, 32) are arranged successively in either the direction of the groove depth, in direction of the groove, or in direction of the movement.

9. A Multi-phase electric machine in accordance with claim 8, **characterized in that** the active parts of the stator are arranged laterally on the segment bars (36), which reach into the rotor.

## Revendications

1. Machine électrique polyphasée avec des pôles électriques prononcés (45), les pôles avec la polarité alternante sont positionnés les uns à côté des autres dans la direction du mouvement, le flux magnétique dans les pôles électriques (45) passe par de la matière magnétique douce (14), et la division du pôle du induit ou stator (6, 18, 21) qui se trouve en face du pôle électrique à l'entrefer est constante sur l'entière circonférence ou sur la longueur de la machine,
il est caractéristique que cette machine a plusieurs unités du pôle électrique polyphasées (3, 16, 20, 37a-39b), dont la quantité des phases est une fraction de la quantité totale des phases de la machine, la division du pôle dans une unité du pôle électrique (3, 37a-39b) est constante, avec les conducteurs (40, 41, 66) ayant une section rectangulaire dans l'unité du pôle électrique, avec les cordes conductrices (13, 22, 61) allant en forme de méandre pendant l'entière longueur de l'unité du pôle électrique concernée, dans des couches (40, 41, 53) parallèles à l'entrefer, quelques divisions du pôle électrique qui sont jointes rigidement (16a-d, 20a-d), qui sont en relation avec les pôles du stator ou avec les pôles du induit (18,21) qui sont en face d'elles, ces divisions du pôle sont déplacées avec la valeur d'une fraction d'une division du pôle, avec les unités du pôle électrique (30, 31, 32) positionnées les unes derrière les autres soit dans la direction de la profondeur de la rainure, soit dans la direction des rainures ou dans la direction du mouvement.

2. Machine électrique polyphasée selon la revendication 1, avec le induit, qui a l'entrefer axiale ou radiale, tournant devant le stator,
il est caractéristique que les unités du pôle électrique (37a-39b) sont formées en forme de secteur, les cordes conductrices (40, 41, 66) ne passent que par une fraction de la circonférence de la machine, la largeur des rainures limites (42, 65) entre deux unités du pôle électrique en forme de secteur qui se trouvent tangentiellement l'une à côté de l'autre, est pour une fraction d'une division du pôle plus grande que la largeur des rainures normales dans une secteur.

3. Machine électrique polyphasée selon la revendication 1,
dont il est caractéristique que la quantité des unités du pôle électrique (3, 37a - 39b) a la valeur de la quantité des phases respectivement d'un multiple entier de la quantité des phases de la machine, avec toutes les unités du pôle électrique réalisées de forme qu'ils sont monophasées et identiques.

4. Machine électrique polyphasée selon la revendication 3,
dont il est caractéristique que les couches conductrices (13a,13b) qui se trouvent les unes sur les autres et qui ne sont séparées que par des couches d'isolation minces, sont déplacées avec la valeur d'une division du pôle dans la direction de la largeur de la rainure; les couches conductrices se trouvent directement au corps magnétique doux (14) et dans les parties, qui vont dans la direction de la profondeur de la rainure dans la tête de bobine (15), elles sont agrandies dans la direction de la profondeur de la rainure relativement aux autres parties.

5. Machine électrique polyphasée selon la revendication 1,
dont il est caractéristique que sur les côtés d'un induit (6) ou d'un stator (36) qui se trouvent face à face, deux unités du pôles électriques identiques (3, 34) sont positionnées, qui sont déplacées avec la valeur d'une moitié d'une division du pôle dans la direction de la largeur de la rainure.

6. Machine électrique polyphasée selon la revendication 5,
dont il est caractéristique que des autres ensembles identiquement construites sont prévues pour le mouvement du élément analogue, avec les induit (6, 35) joints rigidement avec l'élément en mouvement, et les unités du pôle électrique (3, 34) sont déplacées avec la valeur de la quantité des phases égale à la fraction d'une division du pôle relativement aux pôles du induit, et entre les unités du pôle électrique intérieures (3b, 3c), un moyen de réfrigération (2) est en train de circuler.

7. Procédure pour la fabrication d'une machine électrique polyphasée avec des pôles électriques prononcés, avec les pôles ayant la polarité alternante positionnés les uns à côté des autres dans la direction du mouvement, le flux magnétique dans les pôles électriques passe par de la matière magnétique douce, et la division du pôle du induit ou stator qui se trouve en face du pôle électrique à l'entrefer est constante sur l'entière circonférence ou sur la longueur de la machine,
il est caractéristique qu'un conducteur profilé rectangulaire est préfabriqué avec une section du conducteur variable avant qu'on applique l'isolation du conducteur, après qu'on le met dans les couches en forme de méandre dans un dispositif dans les parties du conducteur, qui se trouvent dans les rainures limites entre des unités du pôle électrique monophasées et poly-polaires, il est formé une autre fois et après, la machine est construite avec plusieurs unités du pôle électrique de ce type.

8. Machine électrique polyphasée avec des pôles électriques prononcés (45), les pôles avec la polarité alternante sont positionnés les uns à côté des autres dans la direction du mouvement, le flux magnétique dans les pôles électriques (45) passe par de la matière magnétique douce (14), et la division du pôle du induit ou stator (6, 18, 21) qui se trouve en face du pôle électrique à l'entrefer est constante sur l'entière circonférence ou sur la longueur de la machine,
il est caractéristique que cette machine a plusieurs unités du pôle électrique polyphasées (23a-d, 30, 31, 32, 34), dont la quantité des phases est une fraction de la quantité totale des phases de la machine, la division du pôle dans une unité du pôle électrique (23a-d, 30, 31, 32, 34) est constante, dans un moteur linéaire, les parts actifs du induit ou du stator s'élevant entre toujours deux division du pôle électrique (32; 34), quelques divisions du pôle électrique qui sont jointes rigidement (23a-d, 30, 31, 32, 34), qui sont en relation avec les pôles du stator ou avec les pôles du induit (18, 21) qui sont en face d'elles, ces divisions du pôle sont déplacées avec la valeur d'une fraction d'une division du pôle, avec les unités du pôle électrique (30, 31, 32) positionnées les unes derrière les autres soit dans la direction de la profondeur de la rainure, soit dans la direction des rainures ou dans la direction du mouvement.

9. Machine électrique polyphasée selon la revendication 1,
dont il est caractéristique que les parts actifs du stator sont positionnés collatéralement aux barres de segments 36 qui s'élèvent dans le induit.
